# EUROPEAN PATENT APPLICATION

(11) **EP 1 229 351 A1**
(43) Date of publication of application: **07.08.2002**
(21) Application number: 02250565.5
(22) Date of filing: 28.01.2002
(51) Int. Cl.: G01T 1/29

(54) **A semiconductor detector for use in high-speed x-ray ct, and manufacturing method therefor**

(30) Priority: 31.01.2001 JP 2001023141
(71) Applicant: National Institute of Advanced Industrial Science and Technology, Tokyo (JP)
(72) Inventor: Misawa, Masaki, Ibaraki 305-0035 (JP)
(74) Representative: Findlay, Alice Rosemary

(57) **Abstract**

A polygon-type semiconductor detector (1) for use in a high-speed X-ray CT comprises X-ray modules each constructed by arranging a plurality of X-ray detection pixels (4) (fig 1) formed by means of photolithography in a line on a single planar semiconductor substrate constituted of CdTe (3). Then, a plurality of these X-ray modules is polygonally arranged on the circumference of a measuring section (11) around a measuring area (1a). Thereby, when a multiphase fluid having mutually different densities flows in the measuring area (10), the polygon-type semiconductor detector can acquire the projection data of internal density distributions at high speed.

## Description

The present invention relates to a high-speed X-ray semiconductor detector used, for example, when performing industrial non-destructive inspection. In particular, the present invention relates to a polygon-type semiconductor detector for use in a high-speed X-ray CT. The present invention further relates to a method for manufacturing such a detector.

Conventional detectors for use in X-ray CT have a structure such that scintillator-type or semiconductor-type discrete detection pixels are arranged along the circumference surrounding an object to be detected, as disclosed in e.g., Japanese Unexamined Patent Application Publication No. 10-295682. Since plural detection pixels cannot be processed at the same time, discrete detection pixels are arranged one by one along the circumference.

Such an X-ray CT detector where discrete detection pixels are arranged one by one along a circumference surrounding an object to be detected to enhance the resolution, more detection pixels are required. However the greater the number of detection pixels, the greater the time and cost for manufacturing, and also the higher becomes the probability of failures occurring. In addition, significant variations in detection characteristics occur among detection pixels. Furthermore, the size of a pixel is related to the resolution, so that with manufacture by discretely arranging detection pixels in such a manner, there occurs the problem that resolution is limited by the practicable space.

Therefore, with the known semiconductor detector for use in X-ray CT which detects X-rays by semiconductors, since discrete semiconductor pixels are arranged one by one around an object to be detected, much time and effort has been needed, and in addition, the accuracy thereof has been insufficient.

Another known type of X-ray CT detector has a single one-dimensional linear sensor or a single two-dimensional planar sensor opposite an X-ray source. An object to be detected is interposed therebetween and the sensor is mechanically rotated about the object to be detected.

With an X-ray CT detector where a linear sensor or a planar sensor is rotated, the object often moves during measurement, which causes motion artifact in the image. This raises problems in that measurement of moving objects cannot be achieved, and a complicated driving mechanism is required for fast scanning, resulting in an increased size.

It is amongst the objects of the present invention to provide a compact and simple-structured polygon-type semiconductor detector for use in a high-speed X-ray CT, which eliminates the need to discretely arrange detection pixels, thereby allowing the semiconductor detector to be manufactured inexpensively and in a shorter time than conventional ones, which has a high endurance and a high space resolution, and which can acquire projection data of a section of an object to be detected at a high speed. It is another object to provide a manufacturing method for such a detector.

A polygon-type semiconductor detector for use in a high-speed X-ray CT according to the present invention comprises a plurality of detector modules each formed by arranging, preferably unidirectionally, a plurality of X-ray detection pixels on a single planar semiconductor substrate. The plurality of the detector modules is then polygonally arranged around a measuring area.

It is effective to use CdTe as the semiconductor substrate. The single semiconductor substrate may be provided on a printed circuit board, and the plurality of X-ray detection pixels arranged along a longitudinal direction of the semiconductor substrate. Preferably, the plurality of detection pixels on the single semiconductor substrate is arranged in a line. It is particularly effective to use X-ray detection pixels whose electrodes are made by photolithography.

A method for manufacturing a polygon-type semiconductor detector for use in a high-speed X-ray CT according to the present invention comprises forming a plurality of detector modules each having a plurality of X-ray detection pixels on a single planar semiconductor substrate and polygonally arranging the plurality of detector modules around a measuring area.

With the above-described polygon-type semiconductor detector, it is unnecessary to discretely arrange detection pixels, and thereby the detector can be manufactured inexpensively and in a shorter time than the conventional ones. Also, since detection pixels having homogeneous characteristics can be produced for each detector module, the time and cost for manufacturing can significantly be reduced, thereby allowing a high-speed, high-performance X-ray detector to be easily manufactured.

In addition, since the detector has no driving portion, the detector has a high durability and a high space resolution, and can acquire projection data of a section of an object to be detected at high speed.

Also, when the CdTe semiconductor is used as the substrate, no cooling system is needed, thereby enabling the detector to be more simple-structured and more compact.

Moreover, e.g., when performing an industrial non-destructive inspection, by arranging in a line the plurality of X-ray detection pixels formed on a single semiconductor substrate, the section of an object to be detected can be detected at one time in a planar form using a simple and inexpensive semiconductor detector. Even in the case where the object to be detected is a fluid, such as a fluid flowing in a tube, the state of the flow therein can be easily detected.

The detector is therefore capable of being effectively utilised for visualising the distribution of the solids and gases in an opaque fluid which is difficult to be observed by visible rays, the phase distributions in the cross section of the flow path of a multiphase flow wherein gases and liquids flow as a mixture, or the distributions in the cross-section of the flow path of a powder transport pipe line.

The invention will now be further described by way of example only with reference to the accompanying drawings in which:
Fig. 1 is an enlarged plan view showing a detector module of an embodiment of a polygon-type semiconductor detector for use in a high-speed X-ray CT according to the present invention.
Fig. 2 is a sectional view showing a detector according to an embodiment of the present invention where the detector modules are annularly arranged along the circumference around a measured section.

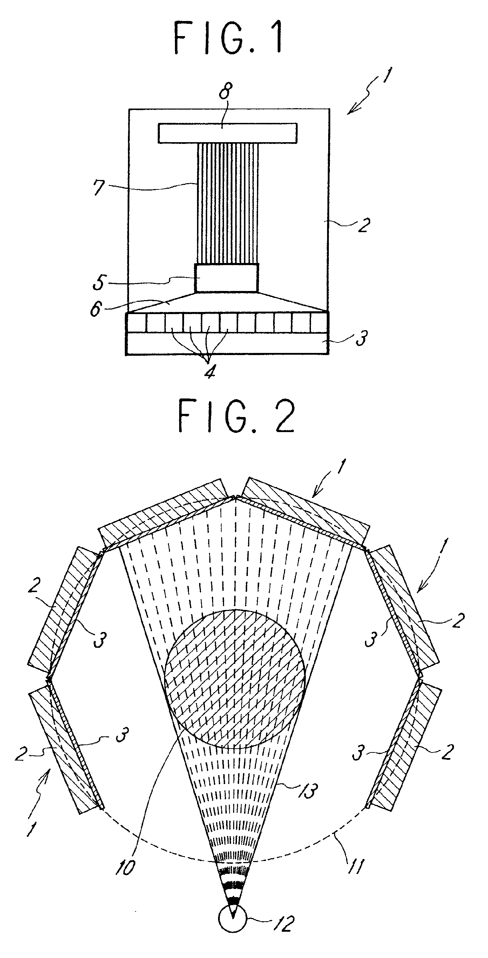

The detector module 1 in Fig. 1 is used in a polygon-type semiconductor detector for high-speed X-ray CT. The detector module 1 has a single planar semiconductor substrate 3 provided at one end portion of a printed circuit board 2. On the semiconductor substrate 3, a plurality of X-ray detection pixels 4 are formed directly by photolithography. Also, a signal processing IC 5 is mounted on the printed circuit board 2, and the channel thereof is connected to each of the detection pixels 4 by wiring 6. The above-mentioned signal processing IC 5 and an external measurement control unit are connected through wiring 7 and a connector 8 formed on the printed circuit board 2.

As the above-described semiconductor substrate 3, it is desirable to use the CdTe semiconductor. In this detector module 1, when using the CdTe semiconductor, which is usable at room temperatures, it is unnecessary for the single semiconductor substrate 3 to have means for temperature control. In addition, since the CdTe semiconductor has an X-ray detection efficiency much higher than the X-ray detection effects of conventional semiconductor detectors such as silicon, the size-reduction of the detector module and the increasing of resolution can be achieved.

As in the illustrated embodiment, the plurality of X-ray detection pixels 4 are unidirectionally arranged on the single narrow planar semiconductor substrate 3 mounted at one end portion on the printed circuit board 2. More specifically, these detection pixels 4 are arranged along the longitudinal direction of the printed circuit board 3, and the detection pixel 4 group is formed by arranging X-ray detection pixels which are mutually homogeneous and of identical size in a line at a constant pitch. As shown in the figure, as the plurality of X-ray detection pixels 4, ones which are arranged in a single line at a minute pitch, may be used. Alternatively, however, X-ray detection pixels which are arranged in a plurality of lines may also be employed.

Fig. 2 shows an embodiment of the polygon-type semiconductor detector for use in a high-speed X-ray CT comprising the above-described detector modules 1.

When using the above-described detector modules 1 as the polygon-type semiconductor detector for use in a high-speed X-ray CT, a plurality of the detector modules 1 is polygonally arranged along the circumference 11 around the measured section at the measuring area 10, and one of X-ray sources 12 which radiates X-ray beams 13 to the measuring area 10 is placed slightly below the detector plane. This allows detection pixels 4 having mutually homogeneous characteristics to be arranged around the measuring area 10 at a minute pitch.

In using the above-described polygon-type semiconductor detector, when the X-ray beams 13 are radiated from the X-ray source 12 to the measuring area 10, all detection pixels 4 are simultaneously triggered by the external measurement control unit to have the signals thereof captured by the signal processing IC 5 after a predetermined data acquisition time.

Thereby, e.g., when a multiphase fluid having mutually different densities flows in the measuring area 10, the projection data of internal density distributions can be acquired at a high speed. On this account, particularly, the present invention can be effectively utilized for visualizing the distributions of the solids and gases in an opaque fluid which is difficult to be observed by visible rays, the phase distributions in the cross section of the flow path of a multiphase flow wherein gases and liquids flows as a mixture, or the distributions in the cross section of the flow path of a powder transport pipe line.

According to the device of the above-described embodiment, since the one line of detection pixel 4 group constructed on the single substrate 3 is formed by arranging mutually homogeneous detection pixels on the straight line at a constant pitch, the detected plane constitutes a plane, thereby easily enabling a high-resolution photographing.

When manufacturing the above-described detection module and the polygon-type semiconductor detector for use in a high-speed X-ray CT using the same, a single planar semiconductor substrate 3 is provided at one end portion on the printed circuit board 2, then on the detector substrate 3, a plurality of X-ray detection pixels 4 have electrodes machined by means of photolithography, and thus a single detector module 1 is manufactured. Then, by arranging a plurality of the above-described detector modules in a polygonal shape around the measuring area 10, an X-ray semiconductor detector can be formed. In this case, since each of the detection pixels 4 is manufactured with a high degree of accuracy by semiconductor processing, it is possible to eliminate errors in assembling, unlike the case where semiconductor pixels are discretely arranged on a circumference.

## Claims

1. A polygon-type semiconductor detector for use in a high-speed X-ray CT, the detector comprising a plurality of detector modules each of which is formed by arranging a plurality of X-ray detection pixels unidirectionally on a single planar semiconductor substrate, the plurality of detector modules being arranged polygonally around a measuring area.

2. A detector according to claim 1 wherein a CdTe semiconductor is used as said semiconductor substrate.

3. A detector according to either claim 1 or claim 2 wherein the single semiconductor substrate is provided on a printed circuit board, and wherein the X-ray detection pixels are arranged along a longitudinal direction of said semiconductor substrate.

4. A detector according to claim 3 wherein the X-ray detection pixels are arranged in a line.

5. A detector according to any preceding claim wherein electrodes of the X-ray detection pixels are formed by means of photolithography.

6. A method for manufacturing a polygon-type semiconductor detector for use in a high-speed X-ray CT, the method comprising forming a plurality of detector modules each having a plurality of X-ray detection pixels arranged on a single planar semiconductor substrate, and polygonally arranging the plurality of detector modules around the measuring area.

7. A method according to claim 6 wherein electrodes of the X-ray detection pixels are formed by means of photolithography.

8. A method according to either claim 6 or claim 7 wherein the X-ray detection pixels are arranged unidirectionally.
